# EUROPEAN PATENT APPLICATION

(11) **EP 3 432 671 A1**
(43) Date of publication of application: **23.01.2019**
(21) Application number: 17181907.1
(22) Date of filing: 18.07.2017
(51) Int. Cl.: H04W 72/12, H04W 16/14, H04W 88/02, H04W 72/04

(54) **COMMUNICATION DEVICE WITH LOCAL SCHEDULER FOR SCHEDULING COMMUNICATION OVER A BANDWIDTH-LIMITED RADIO CHANNEL**

(71) Applicant: Deutsche Telekom AG, 53113 Bonn (DE); Giesecke+Devrient Mobile Security GmbH, 81677 München (DE)
(72) Inventor: SCHNIEDERS, Dominik, 52078 Aachen (DE); SPITZ, Stephan, 85757 Karlsfeld (DE)
(74) Representative: Patentship Patentanwaltsgesellschaft mbH

(57) **Abstract**

The disclosure relates to a communication device (110a), in particular a Narrowband Internet-of-Things (NB-IoT) communication device, comprising: a processor comprising an application program (173) configured to provide data (175); a communication module (172) configured to transmit (133) the data (175) over a bandwidth-limited radio channel; and a local scheduler (171), configured to schedule the data transmission (133) according to a central communication schedule (162), wherein the central communication schedule (162) is based on a metric with respect to communication scheduling requirements of a plurality of communication devices (110a, 110b, 110c, 110d), wherein the metric is based on a sharing scheme for sharing the bandwidth-limited radio channel between the communication devices (110a, 110b, 110c, 110d), wherein the central communication schedule (162) indicates a transmission time interval in which the communication device (110a) is allowed for data transmission (133).

## Description

### TECHNICAL FIELD

In general, the invention relates to wireless communication networks. More specifically, the invention relates to a communication device, in particular a Narrowband Internet-of-Things (NB IoT) communication device, with local scheduler and corresponding method and system for scheduling communication over a bandwidth-limited radio channel, in particular a radio channel of a Low-Power Wide-Area (LPWA) communication network, in particular a NB IoT communication network.

### BACKGROUND

Narrowband Internet-of-Things (NB-IoT) is a new, 3GPP standardized mobile network technology that was designed specifically for the Internet of Things (IoT). With NB-IoT, small amounts of data can either be transferred periodically in longer time intervals or event-oriented. For NB-IoT, a dedicated, narrow-band frequency range of 200 kHz is reserved in the spectrum.

The narrow band spectrum is a bottleneck for the simultaneous transmission of data in a radio cell. If a too large number of devices transmit at the same time, the spectrum will quickly reached its capacity limit. At the radio access network (RAN) level, 3GPP procedures are therefore provided which contribute for a load relieving of the data transmission of the individual devices. However, such procedures result in devices which have to wake up again or which stay longer active or which transmit more often to carry out the data transmission. This additional activity ultimately has a negative effect on the battery life and thus on one of the most important parameters for IoT devices. Initial connection requests (e.g. using the random access channel, RACH) can lead to collisions, which may result in a repeat of the queries also with negative effects on the battery runtime. An overload of the radio resources will happen when an excessively large number of devices transmit at the same time. Such a scenario may be for example due to an absolute time-synchronous programmed transmission, during start-up of the devices as a result of a deterministic program sequence, during a simultaneous function-related resetting of the devices, during programming errors or after a hacking attack urging the IoT devices to perform a distributed denial of service (DDOS) attack, etc.

Hence, there is a need to improve transmission of communication devices, in particular NB-IoT communication devices when operating in communication networks with limited resources, in particular wireless communication networks based on LPWA technology, in particular narrowband IoT networks for the scenarios described above.

### SUMMARY OF THE INVENTION

It is an object of the invention to provide a solution for improving operation of a communication device, in particular an NB-IoT communication device, operating with a multitude of other communication devices in a wireless network, in particular a wireless communication network based on LPWA technology, in particular an NB-IoT network.

The foregoing and other objects are achieved by the subject matter of the independent claims. Further implementation forms are apparent from the dependent claims, the description and the figures.

Embodiments of the present invention relate to communication devices that use NB IoT technology. Narrowband IoT (NB IoT) is a new technology standard, designed to broaden the future of IoT connectivity. Ratified by the 3GPP, NB IoT is starting to being deployed by mobile network operators across the globe. NB IoT is a Low-Power Wide-Area (LPWA) network technology, developed to enable efficient communication for mass distributed NB IoT communication devices across wide geographical footprints and deep within urban infrastructure. It's ideal for devices that generate low data traffic, rely on batteries and typically have a long device life cycle. A battery life of more than 10 years can be supported for a wide range of use cases. Moreover, NB IoT significantly improves the system capacity and spectrum efficiency, especially in deep coverage. Thus, NB IoT can be used to connect simple communication devices, such as sensors, to drive new data streams, reduce operational costs and create new business models. Smart Meters, Smart Bins, environmental monitoring and precision agriculture are just a few applications of NB IoT. Such devices are also referred to as NB IoT cellular devices. More information about NB IoT can be found in the 3GPP technical report TR 45.820.

Although the description is written by using the NB IoT as the access technology, the embodiments are applicable also for communication devices that use other wireless communication technologies as well, such as Global System for Mobile communications (GSM, 2G), GSM EDGE radio access Network (GERAN), General Packet Radio Service (GRPS), Universal Mobile Telecommunication System (UMTS, 3G) based on basic wideband-code division multiple access (W-CDMA), high-speed packet access (HSPA), Long Term Evolution (LTE), LTE-Advanced, and/or 5G system. As used herein, NB IoT technology can comprises, for instance, narrowband LTE, narrowband M2M, and narrowband OFDMA techniques.

In embodiments of the present invention communication devices may be capable of communicating content, data, information and/or signals via a wireless medium or channel. In some embodiments, the wireless medium may include, for example, a radio channel, a cellular channel, an RF channel, a WiFi channel, an IR channel, a Bluetooth (BT) channel, a Global Navigation Satellite System (GNSS) channel, and the like.

In embodiments of the present invention communication devices may include one or more radio modules (or short radios) including circuitry and/or logic to perform wireless communication between the communication devices. In embodiments of the present invention the radio modules may include one or more wireless radio receivers (Rx) including circuitry and/or logic to receive wireless communication signals, RF signals, frames, blocks, transmission streams, packets, messages, data items, and/or data. In embodiments of the present invention the radio modules may include one or more wireless radio transmitters (Tx) including circuitry and/or logic to transmit wireless communication signals, RF signals, frames, blocks, transmission streams, packets, messages, data items, and/or data. In embodiments of the present invention, the radio modules may include Radio Frequency (RF) elements, baseband elements, modulation elements, demodulation elements, amplifiers, analog to digital and/or digital to analog converters, filters and the like, which can be implemented in hardware and/or software.

In embodiments of the present invention the radio modules may be configured to communicate according to an OFDM scheme and/or an FDMA scheme in an uplink direction and/or a downlink direction. In other embodiments, the radios of the communication devices may be configured to communicate according to any other additional or alternative modulation scheme. In embodiments of the present invention, the radios may include, or may be associated with, one or more antennas. In one example, a communication device may include a single antenna. In another example, a communication device may include two or more antennas. Such antennas may include any type of antennas suitable for transmitting and/or receiving wireless communication signals, blocks, frames, transmission streams, packets, messages and/or data. The antennas may include, for example, antennas suitable for directional communication, e.g., using beamforming techniques. For example, the antennas may include a phased array antenna, a multiple element antenna, a set of switched beam antennas, and/or the like. In some embodiments, the antennas may implement transmit and receive functionalities using separate transmit and receive antenna elements. In some embodiments, the antennas may implement transmit and receive functionalities using common and/or integrated transmit/receive elements.

In embodiments of the present invention a communication device may include a processor. The processor may be configured to perform and/or to trigger, cause, instruct and/or control the communication device to perform, one or more communications, to generate and/or communicate one or more messages and/or transmissions, and/or to perform one or more functionalities, operations and/or procedures. In embodiments of the present invention the processor control unit may include circuitry and/or logic, Media-Access Control (MAC) circuitry and/or logic, Physical Layer (PHY) circuitry and/or logic, and/or any other circuitry and/or logic, configured to perform the functionality of the processor.

In embodiments of the present invention, at least part of the functionality of the processor may be implemented by an integrated circuit, for example, a chip, e.g., a System on Chip (SoC). In one example, the chip or SoC may be configured to perform one or more functionalities of the radio as well. For example, the chip or SoC may include one or more elements of the processor and/or one or more elements of the radio. In one example, the processor and the radio may be implemented as part of the chip or SoC.

In embodiments of the present invention, the communication device can be a wearable device, a sensor, small device, a mobile device, and/or any other device, which may be, for example, powered by a battery and/or any other power source having a limited capacity.

In embodiments of the present invention, the communication device can be configured to communicate over one or more narrowband channels, for example, channels with a channel bandwidth of about 200 Kilohertz (KHz). In embodiments of the invention a minimum system bandwidth of 200 kHz on both downlink and uplink can be used. In each direction, the 200 kHz channel can be divided into narrow bandwidth subcarriers, for instance, 48 on the downlink and 36 on the uplink. In the downlink direction, Orthogonal Frequency Division Multiple Access (OFDMA) can be used. In the uplink direction Frequency Division Multiple Access (FDMA) can be used.

According to a first aspect the invention relates to a communication device, in particular a Narrowband Internet-of-Things (NB-IoT) communication device, comprising: a processor comprising an application program configured to provide data; a communication module configured to transmit the data over a bandwidth-limited radio channel; and a local scheduler, configured to schedule the data transmission according to a central communication schedule, wherein the central communication schedule is based on a metric with respect to communication scheduling requirements of a plurality of communication devices, wherein the metric is based on a sharing scheme for sharing the bandwidth-limited radio channel between the communication devices, wherein the central communication schedule indicates a transmission time interval in which the communication device is allowed for data transmission.

By using such a communication device and such local scheduler for scheduling data transmission according to a central communication schedule, transmission for a large number of communication devices can be improved when operating in communication networks with limited resources e.g. wireless communication networks based on LPWA technology. Such an improvement can be achieved in particular for narrowband IoT networks according to the scenarios described hereinafter.

In an implementation form of the communication device, the local scheduler is configured to receive the data from the application program and configured to provide the data to the communication module within the transmission time interval for transmission over the bandwidth-limited radio channel.

This provides the advantage that data processed by the application program can be provided to the local scheduler which is responsible for delivering the data to the communication module at the right time as indicated by the central communication schedule. Hence, the application program is ready to do other tasks after providing the data to the local scheduler.

In an implementation form of the communication device, the application program is configured to provide the data to the local scheduler within a time interval before transmission by the communication module over the bandwidth-limited radio channel.

This provides the advantage that the data is available in time at the local scheduler for transmission by the communication module. I.e. the local scheduler does not have to wait for the data from the application program. This improves accuracy of the scheduling.

In an implementation form of the communication device, the application program is configured to provide the data to the local scheduler at an arbitrary time before transmission by the communication module over the bandwidth-limited radio channel.

This provides the advantage that timing requirements for the application program are relaxed when an arbitrary time can be chosen for the data transmission.

In an implementation form of the communication device, the application program is configured to indicate a time interval to the local scheduler after which the communication module is required to transmit the data over the bandwidth-limited radio channel.

This provides the advantage that the application program can control the exact time at which the data is transmitted by the communication module.

In an implementation form of the communication device, the application program is configured to indicate a prompt transmission of the data to the local scheduler.

This provides the advantage that event-based data can be transmitted immediately. This improves accuracy of transmission.

In an implementation form of the communication device, the application program is configured to operate independently from the local scheduler after providing the data to the local scheduler.

This provides the advantage that the application program can be flexibly used for other processing tasks after delivering the data to the local scheduler. I.e. no timer for controlling data transmission has to be implemented by the application program, since this is implemented by the local scheduler.

In an implementation form of the communication device, the application program is configured to operate in a power-save mode of the processor after providing the data to the local scheduler.

This provides the advantage that processing power can be saved and hence battery life time is extended.

In an implementation form of the communication device, the local scheduler is configured: to schedule the data transmission for a random time within the transmission time interval of the central communication schedule, and to transmit the data at the random time to the communication module.

This provides the advantage that data transmission of different communication devices which are scheduled to transmit during the same transmission time interval is relaxed, since each communication device transmits at a different random time within the scheduled transmission time interval.

In an implementation form of the communication device, the communication device comprises: a secure container configured to accommodate the local scheduler.

This has the advantage that the local scheduler is protected against manipulation by third parties or by faulty behavior in the device. In addition, access rights can be granted to different parties.

In an implementation form of the communication device, the communication device comprises: an interface to a mobile network operator, configured to receive commands for operating the local scheduler.

This provides the advantage that the mobile network operator can control the communication device and hence provide optimum operation for all communication devices operating in his network.

According to a second aspect, the invention relates to a communication device, in particular a Narrowband Internet-of-Things (NB-IoT) communication device, comprising: a communication module configured to receive data over a bandwidth-limited radio channel; a local scheduler, configured to schedule the data reception according to a central communication schedule, wherein the central communication schedule is based on a metric with respect to communication scheduling requirements of a plurality of communication devices, wherein the metric is based on a sharing scheme for sharing the bandwidth-limited radio channel between the communication devices, wherein the central communication schedule indicates a transmission time interval in which receive data is available for the communication device.

By using such a communication device and such local scheduler for scheduling data reception according to a central communication schedule, data reception for a large number of communication devices can be improved when operating in communication networks with limited resources e.g. wireless communication networks based on LPWA technology. Such an improvement can be achieved in particular for narrowband IoT networks according to the scenarios described hereinafter.

In an implementation form, the communication device can include a local scheduler configured to schedule both, data reception and data transmission according to the central communication schedule, i.e. a communication device with a local scheduler according to a combination of the first aspect and the second aspect. This improves operation of communication devices which are transmitting and receiving data.

In an implementation form of the communication device, the metric is based on a radio cell-specific sharing scheme for sharing resources of the radio cell for data reception between communication devices of the plurality of communication devices connected to the radio cell.

This provides the advantage that by applying such a metric, resources of the radio cell can be fairly distributed between the communication devices, e.g. NB-IoT communication devices which results in improved transmission efficiency since collisions are reduced.

In an implementation form of the communication device, the communication device comprises: a secure container configured to accommodate the local scheduler.

This has the advantage that the local scheduler is protected against manipulation by third parties or by faulty behavior in the device. In addition, access rights can be granted to different parties.

According to a third aspect, the invention relates to a method for scheduling data transmission by a local scheduler of a communication device, in particular a Narrowband Internet-of-Things (NB-IoT) communication device, the method comprising: providing data by an application program running on a processor of the communication device; transmitting the data over a bandwidth-limited radio channel; and scheduling the data transmission according to a central communication schedule, wherein the central communication schedule is based on a metric with respect to communication scheduling requirements of a plurality of communication devices, wherein the metric is based on a sharing scheme for sharing the bandwidth-limited radio channel between the communication devices, wherein the central communication schedule indicates a transmission time interval in which the communication device is allowed for data transmission.

By using such a method for scheduling data transmission by a local scheduler according to a central communication schedule, transmission for a large number of communication devices can be improved when multiple communication devices operate in communication networks with limited resources, e.g. wireless communication networks based on LPWA technology. Such an improvement can be achieved in particular for narrowband IoT networks according to the scenarios described hereinafter.

According to a fourth aspect the invention relates to a computer program product comprising program code for performing the method according to the third aspect of the invention, when executed on a computer or a processor.

Embodiments of the invention can be implemented in hardware and/or software.

### BRIEF DESCRIPTION OF THE DRAWINGS

Further embodiments of the invention will be described with respect to the following figures, wherein:
Fig. 1 shows a schematic diagram illustrating an exemplary communication system 100 with a radio access network 131 with several communication devices 110a, 110b, 110c, 110d with respective local schedulers 171, a core network 150 and a central server 160 with a central scheduler 161 for scheduling communication of the communication devices according to an embodiment;
Fig. 2 shows a more detailed schematic diagram of a communication device 110a with a local scheduler 171 and the central scheduler 161 according to an embodiment;
Fig. 3 shows a more detailed schematic diagram of a communication device 110a according to an embodiment; and
Fig. 4 shows a flow diagram illustrating a method 400 for scheduling data transmission by a local scheduler 171 of a communication device 110a according to an embodiment.

In the various figures, identical reference signs will be used for identical or at least functionally equivalent features.

### DETAILED DESCRIPTION OF EMBODIMENTS

In the following detailed description, reference is made to the accompanying drawings, which form part of the disclosure, and in which are shown, by way of illustration, specific aspects in which the present invention may be placed. It is understood that other aspects may be utilized and structural or logical changes may be made without departing from the scope of the present invention. The following detailed description, therefore, is not to be taken in a limiting sense, as the scope of the present invention is defined by the appended claims.

For instance, it is understood that a disclosure in connection with a described method may also hold true for a corresponding device or system configured to perform the method and vice versa. For example, if a specific method step is described, a corresponding device may include a unit to perform the described method step, even if such unit is not explicitly described or illustrated in the figures. Further, it is understood that the features of the various exemplary aspects described herein may be combined with each other, unless specifically noted otherwise.

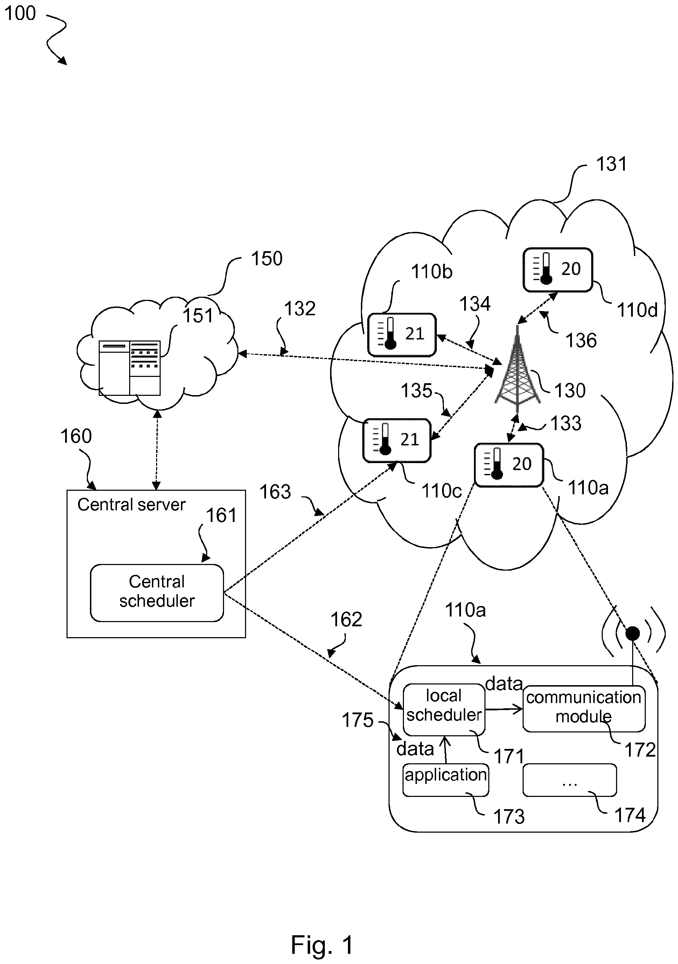

Fig. 1 shows a schematic diagram illustrating an exemplary communication system 100 with a radio access network 131 with several communication devices 110a, 110b, 110c, 110d with respective local schedulers 171, a core network 150 and a central server 160 with a central scheduler 161 for scheduling communication of the communication devices according to an embodiment.

The radio access network 131 and the core network 150 may be components of a cellular communication network, e.g. a low-power wide-area (LPWA) communication network, in particular a LPWA communication network based on narrowband (NB) IoT technology, as described, for instance, in the 3GPP technical report TR 45.820.

In the exemplary embodiment shown in figure 1, the plurality of NB IoT communication devices 110a-d may be implemented as smart temperature sensors configured to monitor temperature data and to provide the temperature data via the core network 150 to a server configured to collect and analyze the temperature data from the plurality of NB IoT communication devices 110a-d.

For the sake of clarity figure 1 shows only a single exemplary base station 130, which is part of the radio access network 131. In other embodiments the radio access network 131 can comprises a plurality of base stations similar to the exemplary base station 130 shown in figure 1.

The core network 150 comprises entities or functions for operating the NB IoT communication network. In the exemplary embodiment, shown in figure 1 the core network 150 comprises an authentication entity 151 configured to perform an authentication procedure with each of the NB IoT communication devices 110a-d before granting full access to the NB IoT communication network 131, 150.

In Figure 1, the NB IoT communication devices 110a-d are connected to the base station 130 via a radio channel. Each NB IoT communication device 110a-d can transmit and/or receive data 133, 134, 135, 136 over the radio channel via the base station 130 further to the core network 150.

A central server 160 that may be located within or without the core network 150 may control the NB IoT communication devices 110a-d. The central server 160 comprises a central scheduler 161 for scheduling communication of the communication devices 110a, 110b, 110c, 110d over radio channel between the communication devices 110a, 110b, 110c, 110d and the base station 130. This radio channel may be a bandwidth-limited radio channel, for example an NB-IoT radio channel. In this context, bandwidth-limited means that the radio channel is in overload if all or at least a portion of the communication devices 110a, 110b, 110c, 110d transmit and/or receive at the same time.

Each of the communication devices 110a-d, for example communication device 110a as highlighted in Fig. 1, includes a processor comprising an application program 173 configured to provide data 175; a communication module 172 configured to transmit 133 the data 175 over the bandwidth-limited radio channel; and a local scheduler 171, configured to schedule the data transmission 133 according to a central communication schedule 162 provided by the central scheduler 161. The central communication schedule 162 is based on a metric with respect to communication scheduling requirements of a plurality of communication devices 110a, 110b, 110c, 110d. The metric is based on a sharing scheme for sharing the bandwidth-limited radio channel between the communication devices 110a, 110b, 110c, 110d. The central communication schedule 162 indicates a transmission time interval in which the communication device 110a is allowed for data transmission 133.

For example communication device 110a is allowed to transmit data during the first 10 seconds of each hour, while communication device 110b is allowed to transmit data during the second 10 seconds of each hour, communication device 110c is allowed to transmit data during the third 10 seconds of each hour, etc. Of course, any other values than exemplarily described herein may be applied. The central communication schedule may be a data list or data record or a table in which for each communication device 110a-d (or at least a portion of the communication devices 110a-d) entries are defined which indicate the respective time intervals in which the respective communication device 110a-d is allowed to transmit and/or receive data.

The metric is a function that defines a distance between each pair of elements of a set. For example, communication device 110a has requirement A and communication device 110b has requirement B. The metric defines a first distance between requirement A and time interval A as well as a second distance between requirement B and time interval A. If the first distance is smaller than the second distance, a result may be that communication device 110a is allowed to transmit within time interval A and communication device 110b is allowed to transmit within another time interval B.

The sharing scheme may distribute the bandwidth-limited radio channel between the communication devices according to their respective requirements. For example the radio resource may be divided into frequency and/or time slots and shared between the communication devices.

The central scheduler 161 may include a memory to store for each communication device 110a, 110b, 110c, 110d information about communication scheduling requirements for the communication device, e.g. the communication device 110a. This information comprises at least one transmission time interval (TTI) in which the respective communication device 110a is able to schedule data transmission 133. The TTI is a time interval or time period in which communication device 110a is scheduled to transmit and/or receive data. For example, a communication device 110a, e.g. an NB IoT communication device 110a-d may be scheduled to wake-up once (or twice or several times) per hour or once (or twice or several times) per day for a time of e.g. 10 seconds (or 1, 2, 5, 20, 30, 60, 120 seconds) in order to transmit and/or receive data. Of course, any other values than exemplarily described herein may be applied.

The central scheduler 161 may include a processor to determine the central communication schedule based on a metric with respect to the communication scheduling requirements for at least a portion of the plurality of communication devices, e.g. the communication devices 110a, 110c as shown in Fig. 1. The metric is based on a sharing scheme for sharing the bandwidth-limited radio channel between the all or the portion of communication devices 110a, 110c. The central communication schedule indicates for each communication device a transmission time interval in which the respective communication device is allowed for data transmission.

The transmitter of the central scheduler 161 transmits the central communication schedule to the communication devices 110a, 110b, 110c, 110d. According to the central communication schedule, the communication devices 110a, 110b, 110c, 110d can schedule their respective data transmissions 133, 134, 135, 136. For example, communication device 110a schedules transmission in time interval t1-t2 and frequency range f1-f2; communication device 110b schedules transmission in time interval t2-t3 and frequency range f1-f2; communication device 110c schedules transmission in time interval t1-t2 and frequency range f2-f3 and communication device 110d schedules transmission in time interval t2-t3 and frequency range f2-t3.

Figure 1 illustrates a communication system 100 including a plurality of communication devices 110a, 110b, 110c, 110d as described above which are connected over a bandwidth-limited radio channel, in particular an NB-IoT radio channel, to the radio access network 131. The communication system 100 further includes a core network 150 coupled via wired or wireless data link(s) 132 to the radio access network 131. The core network 150 includes a central server 160 as described above including a central scheduler 161 as described above, which is configured to schedule the communication of the communication devices 110a, 110b, 110c, 110d over the radio access network 131.

In one exemplary implementation, at least a portion of the communication devices, e.g. communication devices 110a, 110c are connected over a further bandwidth-limited radio channel to a further radio access network (not shown in Fig. 1). The processor may be configured to determine the central communication schedule based on a metric with respect to a sharing scheme for sharing the bandwidth-limited radio channel and the further bandwidth-limited radio channel (of the other RAN) between the respective communication devices 110a, 110b, 110c, 110d.

The central server 160 may control interaction between the central scheduler 161 and the local schedulers 171 of the respective communication devices 110a.

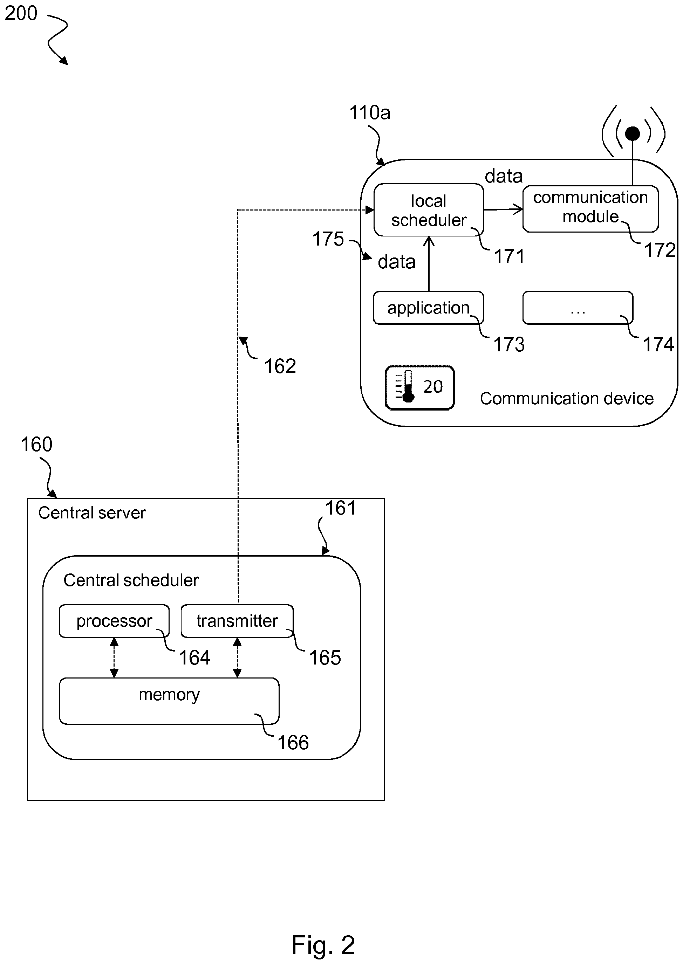

Fig. 2 shows a more detailed schematic diagram of a communication device 110a with a local scheduler 171 and the central scheduler 161 according to an embodiment.

The communication device 110a includes a processor comprising an application program 173 configured to provide data 175; a communication module 172 configured to transmit 133 the data 175 over a bandwidth-limited radio channel; and a local scheduler 171, configured to schedule the data transmission 133 according to a central communication schedule 162. The central communication schedule 162 is based on a metric with respect to communication scheduling requirements of a plurality of communication devices 110a, 110b, 110c, 110d. The metric is based on a sharing scheme for sharing the bandwidth-limited radio channel between the communication devices 110a, 110b, 110c, 110d. The central communication schedule 162 indicates a transmission time interval in which the communication device 110a is allowed for data transmission 133.

The local scheduler 171 may be configured to receive the data 175 from the application program 173 and configured to provide the data 175 to the communication module 172 within the transmission time interval for transmission 133 over the bandwidth-limited radio channel.

The application program 173 may provide the data 175 to the local scheduler 171 within a time interval before transmission 133 by the communication module 172 over the bandwidth-limited radio channel.

The application program 173 may provide the data 175 to the local scheduler 171 at an arbitrary time before transmission 133 by the communication module 172 over the bandwidth-limited radio channel.

The application program 173 may indicate a time interval to the local scheduler 171 after which the communication module 172 is required to transmit 133 the data 175 over the bandwidth-limited radio channel.

In one implementation, the application program 173 may indicate a prompt transmission of the data 175 to the local scheduler 171, e.g. for event-based data processing.

The application program 173 may operate independently from the local scheduler 171 after providing the data 175 to the local scheduler 171.

The application program 173 may operate in a power-save mode of the processor after providing the data 175 to the local scheduler 171.

The local scheduler 171 may be configured to schedule the data transmission 133 for a random time within the transmission time interval of the central communication schedule 162, and to transmit the data 175 at the random time to the communication module 172.

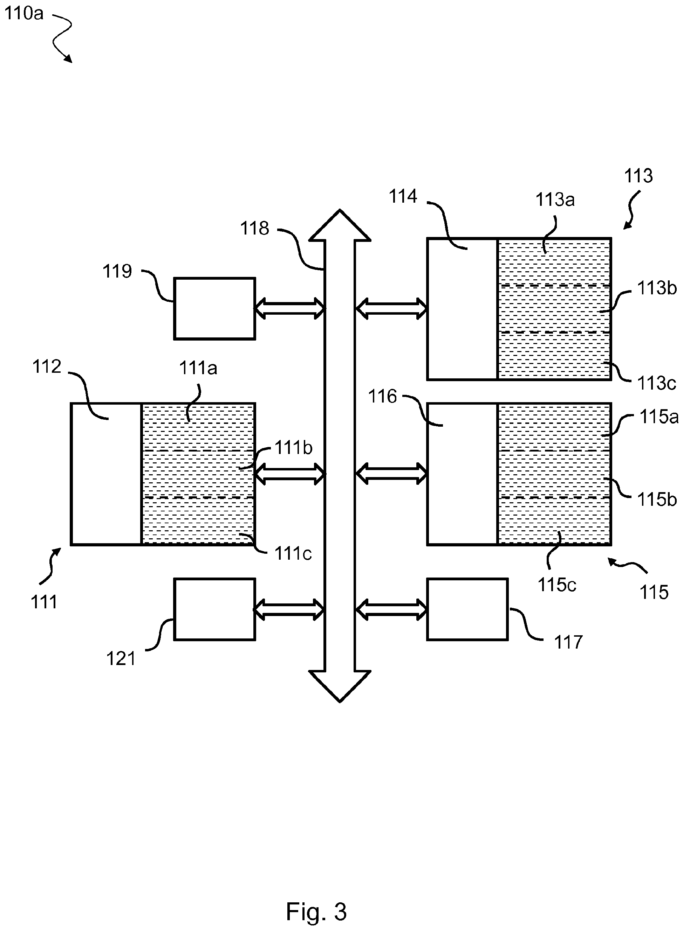

The communication device 110a may include a secure container, e.g. a secure container 111 a-c, 113a-c, 115a-c as described below with respect to Fig. 3, configured to accommodate the local scheduler 171.

The communication device 110a may include an interface to a mobile network operator, configured to receive commands for operating the local scheduler 171.

The communication device 110a may be configured to transmit data as described above. Alternatively or additionally, the communication device 110a may be configured to receive data as described in the following.

A communication device (110a) configured to receive data includes a communication module 172 configured to receive data 133 over a bandwidth-limited radio channel; and a local scheduler 171, configured to schedule the data reception 133 according to a central communication schedule 162. The central communication schedule 162 is based on a metric with respect to communication scheduling requirements of a plurality of communication devices 110a, 110b, 110c, 110d, wherein the metric is based on a sharing scheme for sharing the bandwidth-limited radio channel between the communication devices 110a, 110b, 110c, 110d, wherein the central communication schedule 162 indicates a transmission time interval in which receive data 133 is available for the communication device 110a.

In an implementation, the metric is based on a radio cell-specific sharing scheme for sharing resources of the radio cell 130 for data reception 133, 134, 135, 136 between communication devices of the plurality of communication devices 110a, 110b, 110c, 110d connected to the radio cell 130.

In one implementation, the communication device 110a includes a secure container, e.g. a secure container 111 a-c, 113a-c, 115a-c as described below with respect to Fig. 3, configured to accommodate the local scheduler 171.

In the following, possible embodiments of the central scheduler 161 are described.

The central scheduler 161 schedules communication of a plurality of communication devices 110a, 110b, 110c, 110d, in particular NB-IoT communication devices over a bandwidth-limited radio channel, e.g. an NB-IoT radio channel, as described above with respect to Fig. 1.

The central scheduler 161 may include a memory 166, a processor 164 and a transmitter 165 and may include further hardware components not depicted in Fig. 2, e.g. a receiver, a radio interface, etc.

The memory 166 is configured to store for each communication device of the plurality of communication devices 110a, 110b, 110c, 110d information about communication scheduling requirements for the respective communication device 110a. This information may include at least one transmission time interval in which the respective communication device 110a is able to schedule data transmission 133, e.g. as described above with respect to Fig. 1.

The processor 164 is configured to determine a central communication schedule 162 based on a metric with respect to the communication scheduling requirements for at least a portion of the plurality of communication devices 110a, 110b, 110c, 110d. The metric may be based on a sharing scheme for sharing the bandwidth-limited radio channel between the communication devices 110a, 110b, 110c, 110d. The central communication schedule 162 may indicate for each communication device 110a, 110b, 110c, 110d a transmission time interval in which the respective communication device, e.g. communication device 110a is allowed for data transmission 133, e.g. as described above with respect to Fig. 1.

The transmitter 165 is configured to transmit the central communication schedule 162 to the communication devices 110a, 110b, 110c, 110d for instructing the communication devices to schedule their data transmission 133, 134, 135, 136 according to the central communication schedule 162.

In an exemplary implementation of the metric, the metric may be based on a radio cell-specific sharing scheme for sharing resources of the radio cell 130 for data transmission 133, 134, 135, 136 between communication devices 110a, 110b, 110c, 110d connected to the radio cell 130.

The information about communication scheduling requirements for a communication device, e.g. communication device 110a, may include an indication whether the communication device 110a is able to schedule data transmission 133 at a random point in time within the transmission time interval, for example within a random time between t1 and t2.

The information about communication scheduling requirements for a communication device, e.g. communication device 110a, may further include an indication whether the communication device 110a is required to keep a predetermined time distance between two transmissions 133. For example, communication device 110a needs a pause of e.g. 1 seconds between two contiguous transmissions.

The information about communication scheduling requirements for a communication device, e.g. communication device 110a, may further include an indication whether the communication device 110a is able to schedule two transmissions 133 based on a random time distance in between. E.g. communication device 110a may be able to apply (or wait for) a random time after the first transmission before starting the second transmission.

The communication scheduling requirements for a communication device, e.g. communication device 110a, may be predetermined, e.g. depending on a type and/or manufacturer of the communication device 110a.

In an exemplary implementation form, the information about the communication scheduling requirements of a communication device, e.g. communication device 110a, may be stored within the communication device 110a. The processor may instruct the communication device 110a to readout the information about the communication scheduling requirements and transmit the information to the central scheduler 161.

In one exemplary implementation of the metric, the metric may be based on a minimum peak transmission criterion enabling minimum peak transmission rates over all scheduled transmissions 133, 134, 135, 136 of the communication devices 110a, 110b, 110c, 110d. I.e. transmission peaks should be kept as low as possible in order to avoid overload situations.

In one exemplary implementation of the metric, the metric may be based on a uniform transmission criterion enabling a uniform transmission distribution over all scheduled transmissions 133, 134, 135, 136 of the communication devices 110a, 110b, 110c, 110d. I.e. a transmission power over all transmissions on the radio channel should be uniformly distributed, in order to save resources.

In one exemplary implementation of the metric, the metric may be based on event-based load situations of the radio channel which are learned from history data and predicted for the future. For example, some communication devices may be configured to transmit on an event-based schedule, for example when the network operator requests to transmit data or when a software update is triggered. Such events can be learned in predicted for the future.

In the following, an exemplary implementation of the interworking of the central scheduler 161 with the local scheduler 171 of a respective communication device 110a-d is described.

The central scheduler 161 may be arranged on the backend / server 160 side together with a local scheduling instance, i.e. an instance of the local scheduler 171 may be implemented in the central server 160. In the back end, e.g. on the central server 160, the purpose or requirements of the communication of the individual devices 110a, 110b, 110c, 110d (or groups of devices) in a cell 130, 131 may be collected and stored for the individual devices. Such communication requirements may include for example the following items: Periodicity / period for transmission (e.g., every 30 minutes, 1 h, 24h, 1 week, 1 month, etc.), a flag whether to transmit within a period at a random time, a flag, whether a fixed distance between two transmissions must be maintained or can also be randomly distributed, and other parameters. These communication requirements can be specified by the manufacturer of the device or by one or more customer(s). The communication requirements can be read out by the device. By means of the communication requirements of the individual devices, an optimized distribution of the communication over all devices in a respective cell can be generated in a central scheduler (central communication schedule implementation).

The metric can be implemented in such a way that the peak load is as low as possible in the network and the distribution of communication in the network is as good as possible. For example, depending on the scheduled periodic transmissions (according to communication requirements); and/or depending on event-based load situations, which are learned from historical data and prognosticated for the future; and/or depending on third-party data, which can influence event-based communication of the devices (e.g. large events which have influence on park sensors, etc.); and/or depending on other parameters which can be used to predict load situations, the metric can be designed.

The result of the central scheduler can be transferred to a local instance (local scheduler) in the device 110a, 110b, 110c, 110d. The local scheduler 171 may accept the data from the application 173 in the device. The data can be transmitted at any time before transmission via the radio network from the application 173 to the local scheduler 171. The application 173 can then continue to work asynchronously / independent of the local scheduler 171 (including Power Save Mode)

The transferred data from the interface between application 173 and local scheduler 171 can be distinguished according to its type and can be accordingly marked in the interface: For example, data collected by the central scheduler 161, e.g. periodic data or event-based data. Event-based data can be transferred directly from the local scheduler 171 to the communication module 172 for immediate transmission (outside the central communication schedule implementation).

Depending on the metric for the device, the data may be transferred from the local scheduler 171 to the communication module 172 at the right time. The communication module 172 may transmit the data according to the protocol specifications of the communication interface.

According to a first option, the local scheduler 171 can run in a secure container, e.g. as described below with respect to Fig. 3. Hereinafter a security area may be referred to as a local, secure container. This has the advantage that the local scheduler 171 is protected against manipulation by third parties or by faulty behavior in the device. In addition, access rights can be granted to different parties.

According to a second option, the central scheduler 161 and the local scheduler 171 can each be operated by a third party (such as the Mobile Network Operator).

In the following, an exemplary implementation of the local scheduler 171 is described. The local scheduler 171 may be implemented in the device 110a as shown in Fig. 2. The local scheduler 171 may accept data from the application 173 in the device 110a. The data can be transmitted from the application 173 to the local scheduler 171 at any time before transmission via the radio network, e.g. with transmission 133 to the base station 130 as shown in Fig. 1. The application 173 can then continue to work asynchronously and/or independent of the local scheduler 171 (including Power Save Mode). The transferred data on the interface between the application 173 and the local scheduler 171 may be represented by at least the following data structure: A period in which the data are to be transmitted (e.g., within 30 minutes, 1 h, 24h, 1 week, 1 month, etc.), the payload and other parameters. In one example, data can be declared to be transmitted immediately (for example, for event-based transmission).

In the local scheduler 171, a point in time T can now be determined based on a random process within the given time period described above. This ensures a uniform distribution of the transmission time over several devices. The data can be transferred, for example at time T, from the local scheduler 171 to the communication module 172. The communication module 172 can be configured to transmit the data according to the protocol specifications of the communication interface.

Optionally, the local scheduler 171 can run in a secure container, e.g. as described below with respect to Fig. 3. This provides the advantage that the local scheduler 171 is protected against manipulation by third parties or by faulty behavior in the device 110a. In addition, access rights can be granted to different parties.

Optionally, the local scheduler 171 can be operated by a third party (such as the Mobile Network Operator).

Fig. 3 shows a more detailed schematic diagram of a communication device 110a according to an embodiment. Under further reference to figure 3 in the following a further embodiment of the NB IoT communication device 101 a will be described. The communication device 110a comprises a processor 111 configured to process data and running applications providing one or more security functions, a memory comprising a RAM 113 and a Flash memory 115 configured to store volatile and non-volatile data (in particular executable application code), respectively, and a radio 117 configured to transmit and/or receive data over the NB IoT communication network 100. In an embodiment, the radio 117 can be configured to use one or more subcarriers of a channel bandwidth of about 200 Kilohertz (KHz) to communicate with the base station on the basis of an OFDMA scheme in the downlink direction and on the basis of a FDMA scheme in the uplink direction. Alternatively to or in addition to the Flash memory 115 the communication device 110a can comprise a ROM as well.

In an embodiment, the processor 111, the ROM 113, the Flash memory 115 and/or the radio 117 can be implemented as a system on a chip. As illustrated in figure 3, in an embodiment the communication device 110a further comprises a communication bus system 118 configured to provide for the flow of data between the processor 111, the ROM 113, the Flash memory 115 and the radio 117.

In an embodiment, the communication device 110a further comprises a sensor 119 configured to collect data, wherein the security system of the communication device 110a is further configured to restrict access to the sensor 119 to one or more selected sets of the three sets of security domains 111a-c, 113a-c, 115a-c. For example, the security system can be configured to restrict access to the sensor 119 to the first set of security domains 111 a, 113a, 115a and/or the second set of security domains 111 b, 113b, 115b.

In addition or alternatively, in an embodiment the communication device 110a further comprises an actuator 121, wherein the security system of the communication device is further configured to restrict access to the actuator 121 to one or more selected sets of the three sets of security domains 111 a-c, 113a-c, 115a-c. For example, the security system can be configured to restrict access to the actuator 121 to the first set of security domains 111 a, 113a, 115a and/or the third set of security domains 111 c, 113c, 115c.

The communication device 110a further comprises a security system configured to operate one or more sets of logically separated security domains 111a-c, 113a-c, 115a-c on the processor 111, the volatile RAM 113 and the non-volatile Flash memory 115. By way of example, in the embodiment shown in figure 2 the security system of the communication device 110a may operate three different sets of security domains, namely a first set of security domains, comprising a processor security domain 111 a, a RAM security domain 113a and a Flash memory security domain 115a, a second set of security domains, comprising a processor security domain 111 b, a RAM security domain 113b and a Flash memory security domain 115b, and a third set of security domains, comprising a processor security domain 111 c, a RAM security domain 113c and a Flash memory security domain 115c.

The local scheduler 171 as described above with respect to Figures 1 and 2 may be operated by such a security system, in particular on the areas 111a-c, 113a-c, 115a-c described in the following.

The respective security domains of a set of security domains, for instance, the processor security domain 111 a, the RAM security domain 113a and the Flash memory security domain 115a of the first set of security domains may be logically separated from the security domains of other sets of security domains and may be configured to interact with each other to provide at least one respective security function.

In the embodiment shown in figure 3 the processor security domain 111 a, the RAM security domain 113a and the Flash memory security domain 115a of the first set of security domains may be configured to interact with each other for authenticating the communication device 110a with the authentication entity 151 of the core network 150 of the NB IoT communication network 100 and, thus, provide the communication device 110a with a (i)UICC function.

In one exemplary implementation, the processor security domain 111 a, the RAM security domain 113a and the Flash memory security domain 115a of the first set of security domains may be configured to interact with each other for storing for each communication device information about communication scheduling requirements for the respective communication device, i.e. information comprising at least one transmission time interval in which the respective communication device is able to schedule data transmission as described above.

In one exemplary implementation, the processor security domain 111 a, the RAM security domain 113a and the Flash memory security domain 115a of the first set of security domains may be configured to interact with each other for determining the central communication schedule based on a metric with respect to the communication scheduling requirements for the communication devices as described above with respect to Figures 1 and 2.

In one exemplary implementation, the processor security domain 111a, the RAM security domain 113a and the Flash memory security domain 115a of the first set of security domains may be configured to interact with each other for storing and/or processing the sharing scheme for sharing the bandwidth-limited radio channel between the communication devices as described above with respect to Figures 1 and 2.

The security system of the communication device 110 shown in figure 3 may be further configured to restrict access to the radio 117 to one or more selected sets of the one or more sets of security domains. For example, the security system may be configured to restrict access to the radio 117 to the first set of security domains only, i.e. only the processor security domain 111 a of the first set of security domains can access the radio 117 and interact therewith, for instance, for transmitting sensor data collected by a sensor 119 over the NB IoT communication network 100. In another embodiment, the security system of the communication device 110 shown in figure 3 can be configured to allow the first and the second set of security domains access to the radio 117, but not the third set of security domains.

The security system of the communication device 110a shown in figure 3 can be implemented in hardware and/or software. In an embodiment, the security system can be implemented using virtualization techniques. In an embodiment, the different RAM security domains 113a-c can be provided by different partitions of the RAM 113. In an embodiment, the data in the different RAM security domains 113a-c are accessible using "memory mapped I/O".

In one implementation form of the communication device 110a, for providing the (i)UICC security function the Flash memory security domain 115a of the first set of security domains can store data and/or keys for authenticating the communication devices 110a, 110b, 110c, 110d.

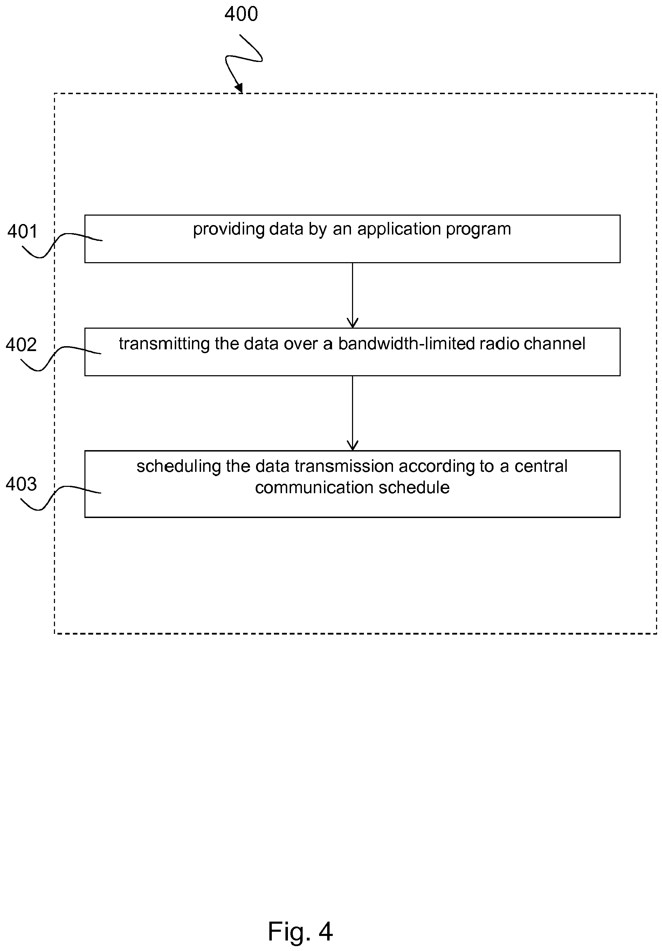

Fig. 4 shows a flow diagram illustrating a method 400 for scheduling data transmission by a local scheduler 171 of a communication device 110a, e.g. a communication device 110a, 110b, 110c, 110d as described above with respect to Figures 1 to 3, in particular a NB-IoT communication device over a bandwidth-limited radio channel, e.g. an NB-IoT radio channel.

The method 400 includes: providing 401 data by an application program running on a processor of the communication device, e.g. an application program 173 as described above with respect to Figures 1 and 2.

The method 400 further includes: transmitting 402 the data over a bandwidth-limited radio channel, e.g. a radio channel for transmission 133 between communication device 110a and base station 130 as described above with respect to Figures 1 and 2.

The method 400 further includes: scheduling 403 the data transmission 133 according to a central communication schedule, e.g. a central communication schedule as described above with respect to Figures 1 and 2, wherein the central communication schedule is based on a metric with respect to communication scheduling requirements of a plurality of communication devices 110a, 110b, 110c, 110d, wherein the metric is based on a sharing scheme for sharing the bandwidth-limited radio channel between the communication devices 110a, 110b, 110c, 110d, wherein the central communication schedule 162 indicates a transmission time interval in which the communication device 110a is allowed for data transmission 133, e.g. as described above with respect to Figures 1 to 3.

While a particular feature or aspect of the disclosure may have been disclosed with respect to only one of several implementations or embodiments, such feature or aspect may be combined with one or more other features or aspects of the other implementations or embodiments as may be desired and advantageous for any given or particular application. Furthermore, to the extent that the terms "include", "have", "with", or other variants thereof are used in either the detailed description or the claims, such terms are intended to be inclusive in a manner similar to the term "comprise". Also, the terms "exemplary", "for example" and "e.g." are merely meant as an example, rather than the best or optimal. The terms "coupled" and "connected", along with derivatives may have been used. It should be understood that these terms may have been used to indicate that two elements cooperate or interact with each other regardless whether they are in direct physical or electrical contact, or they are not in direct contact with each other.

Although specific aspects have been illustrated and described herein, it will be appreciated by those of ordinary skill in the art that a variety of alternate and/or equivalent implementations may be substituted for the specific aspects shown and described without departing from the scope of the present disclosure. This application is intended to cover any adaptations or variations of the specific aspects discussed herein.

Although the elements in the following claims are recited in a particular sequence, unless the claim recitations otherwise imply a particular sequence for implementing some or all of those elements, those elements are not necessarily intended to be limited to being implemented in that particular sequence.

Many alternatives, modifications, and variations will be apparent to those skilled in the art in light of the above teachings. Of course, those skilled in the art readily recognize that there are numerous applications of the invention beyond those described herein. While the present invention has been described with reference to one or more particular embodiments, those skilled in the art recognize that many changes may be made thereto without departing from the scope of the present invention. It is therefore to be understood that within the scope of the appended claims and their equivalents, the invention may be practiced otherwise than as specifically described herein.

## Claims

1. A communication device (110a), in particular a Narrowband Internet-of-Things (NB-IoT) communication device, comprising:
a processor comprising an application program (173) configured to provide data (175);
a communication module (172) configured to transmit (133) the data (175) over a bandwidth-limited radio channel; and
a local scheduler (171), configured to schedule the data transmission (133) according to a central communication schedule (162),
wherein the central communication schedule (162) is based on a metric with respect to communication scheduling requirements of a plurality of communication devices (110a, 110b, 110c, 110d), wherein the metric is based on a sharing scheme for sharing the bandwidth-limited radio channel between the communication devices (110a, 110b, 110c, 110d), wherein the central communication schedule (162) indicates a transmission time interval in which the communication device (110a) is allowed for data transmission (133).

2. The communication device (110a) of claim 1,
wherein the local scheduler (171) is configured to receive the data (175) from the application program (173) and configured to provide the data (175) to the communication module (172) within the transmission time interval for transmission (133) over the bandwidth-limited radio channel.

3. The communication device (110a) of claim 1 or 2,
wherein the application program (173) is configured to provide the data (175) to the local scheduler (171) within a time interval before transmission (133) by the communication module (172) over the bandwidth-limited radio channel.

4. The communication device (110a) of one of the preceding claims,
wherein the application program (173) is configured to provide the data (175) to the local scheduler (171) at an arbitrary time before transmission (133) by the communication module (172) over the bandwidth-limited radio channel.

5. The communication device (110a) of one of the preceding claims,
wherein the application program (173) is configured to indicate a time interval to the local scheduler (171) after which the communication module (172) is required to transmit (133) the data (175) over the bandwidth-limited radio channel.

6. The communication device (110a) of one of the preceding claims,
wherein the application program (173) is configured to indicate a prompt transmission of the data (175) to the local scheduler (171).

7. The communication device (110a) of one of the preceding claims,
wherein the application program (173) is configured to operate independently from the local scheduler (171) after providing the data (175) to the local scheduler (171).

8. The communication device (110a) of one of the preceding claims,
wherein the application program (173) is configured to operate in a power-save mode of the processor after providing the data (175) to the local scheduler (171).

9. The communication device (110a) of one of the preceding claims,
wherein the local scheduler (171) is configured:
to schedule the data transmission (133) for a random time within the transmission time interval of the central communication schedule (162), and
to transmit the data (175) at the random time to the communication module (172).

10. The communication device (110a) of one of the preceding claims, comprising:
a secure container (111 a-c, 113a-c, 115a-c) configured to accommodate the local scheduler (171).

11. The communication device (110a) of one of the preceding claims, comprising:
an interface to a mobile network operator, configured to receive commands for operating the local scheduler (171).

12. A communication device (110a), in particular a Narrowband Internet-of-Things (NB-IoT) communication device, comprising:
a communication module (172) configured to receive data (133) over a bandwidth-limited radio channel; and
a local scheduler (171), configured to schedule the data reception (133) according to a central communication schedule (162),
wherein the central communication schedule (162) is based on a metric with respect to communication scheduling requirements of a plurality of communication devices (110a, 110b, 110c, 110d), wherein the metric is based on a sharing scheme for sharing the bandwidth-limited radio channel between the communication devices (110a, 110b, 110c, 110d), wherein the central communication schedule (162) indicates a transmission time interval in which receive data (133) is available for the communication device (110a).

13. The communication device (110a) of claim 12,
wherein the metric is based on a radio cell-specific sharing scheme for sharing resources of the radio cell (130) for data reception (133, 134, 135, 136) between communication devices of the plurality of communication devices (110a, 110b, 110c, 110d) connected to the radio cell (130).

14. The communication device (110a) of claim 12 or 13, comprising:
a secure container (111 a-c, 113a-c, 115a-c) configured to accommodate the local scheduler (171).

15. A method (400) for scheduling data transmission (133) by a local scheduler (171) of a communication device (110a), in particular a Narrowband Internet-of-Things (NB-IoT) communication device, the method (400) comprising:
Providing (401) data (175) by an application program (173) running on a processor of the communication device;
transmitting (402) the data (175) over a bandwidth-limited radio channel; and
scheduling the data transmission (133) according to a central communication schedule (162),
wherein the central communication schedule (162) is based on a metric with respect to communication scheduling requirements of a plurality of communication devices (110a, 110b, 110c, 110d), wherein the metric is based on a sharing scheme for sharing the bandwidth-limited radio channel between the communication devices (110a, 110b, 110c, 110d), wherein the central communication schedule (162) indicates a transmission time interval in which the communication device (110a) is allowed for data transmission (133).

## Amended claims

### Amended claims in accordance with Rule 137(2) EPC.

1. A communication device (110a), in particular a Low Power Wide Area, LPWA, communication device, comprising:
a processor comprising an application program (173) configured to provide data (175);
a communication module (172) configured to transmit (133) the data (175) over a bandwidth-limited radio channel; and
a local scheduler (171), configured to receive a central communication schedule (162) from a central scheduler (161) and to schedule the data transmission (133) according to the central communication schedule (162),
wherein the central communication schedule (162) is based on a metric with respect to communication scheduling requirements of a plurality of communication devices (110a, 110b, 110c, 110d), wherein the metric is based on a sharing scheme for sharing the bandwidth-limited radio channel between the communication devices (110a, 110b, 110c, 110d), wherein the central communication schedule (162) indicates a transmission time interval in which the communication device (110a) is allowed for data transmission (133).

2. The communication device (110a) of claim 1,
wherein the local scheduler (171) is configured to receive the data (175) from the application program (173) and configured to provide the data (175) to the communication module (172) within the transmission time interval for transmission (133) over the bandwidth-limited radio channel.

3. The communication device (110a) of claim 1 or 2,
wherein the application program (173) is configured to provide the data (175) to the local scheduler (171) within a time interval before transmission (133) by the communication module (172) over the bandwidth-limited radio channel.

4. The communication device (110a) of one of the preceding claims,
wherein the application program (173) is configured to provide the data (175) to the local scheduler (171) at an arbitrary time before transmission (133) by the communication module (172) over the bandwidth-limited radio channel.

5. The communication device (110a) of one of the preceding claims,
wherein the application program (173) is configured to indicate a time interval to the local scheduler (171) after which the communication module (172) is required to transmit (133) the data (175) over the bandwidth-limited radio channel.

6. The communication device (110a) of one of the preceding claims,
wherein the application program (173) is configured to indicate a prompt transmission of the data (175) to the local scheduler (171).

7. The communication device (110a) of one of the preceding claims,
wherein the application program (173) is configured to operate independently from the local scheduler (171) after providing the data (175) to the local scheduler (171).

8. The communication device (110a) of one of the preceding claims,
wherein the application program (173) is configured to operate in a power-save mode of the processor after providing the data (175) to the local scheduler (171).

9. The communication device (110a) of one of the preceding claims,
wherein the local scheduler (171) is configured:
to schedule the data transmission (133) for a random time within the transmission time interval of the central communication schedule (162), and
to transmit the data (175) at the random time to the communication module (172).

10. The communication device (110a) of one of the preceding claims, comprising:
a secure container (111a-c, 113a-c, 115a-c) configured to accommodate the local scheduler (171).

11. The communication device (110a) of one of the preceding claims, comprising:
an interface to a mobile network operator, configured to receive commands for operating the local scheduler (171).

12. A communication device (110a), in particular a Low Power Wide Area, LPWA, communication device, comprising:
a communication module (172) configured to receive data (133) over a bandwidth-limited radio channel; and
a local scheduler (171), configured to receive a central communication schedule (162) from a central scheduler (161) and to schedule the data reception (133) according to the central communication schedule (162),
wherein the central communication schedule (162) is based on a metric with respect to communication scheduling requirements of a plurality of communication devices (110a, 110b, 110c, 110d), wherein the metric is based on a sharing scheme for sharing the bandwidth-limited radio channel between the communication devices (110a, 110b, 110c, 110d), wherein the central communication schedule (162) indicates a transmission time interval in which receive data (133) is available for the communication device (110a).

13. The communication device (110a) of claim 12,
wherein the metric is based on a radio cell-specific sharing scheme for sharing resources of the radio cell (130) for data reception (133, 134, 135, 136) between communication devices of the plurality of communication devices (110a, 110b, 110c, 110d) connected to the radio cell (130).

14. The communication device (110a) of claim 12 or 13, comprising:
a secure container (111a-c, 113a-c, 115a-c) configured to accommodate the local scheduler (171).

15. A method (400) for scheduling data transmission (133) by a local scheduler (171) of a communication device (110a), in particular a Low Power Wide Area, LPWA, communication device, the method (400) comprising:
providing (401) data (175) by an application program (173) running on a processor of the communication device;
receiving a central communication schedule (162) from a central scheduler (161) and scheduling the data transmission (133) according to the central communication schedule (162); and
transmitting (402) the data (175) over a bandwidth-limited radio channel,
wherein the central communication schedule (162) is based on a metric with respect to communication scheduling requirements of a plurality of communication devices (110a, 110b, 110c, 110d), wherein the metric is based on a sharing scheme for sharing the bandwidth-limited radio channel between the communication devices (110a, 110b, 110c, 110d), wherein the central communication schedule (162) indicates a transmission time interval in which the communication device (110a) is allowed for data transmission (133).
